# EUROPÄISCHE PATENTANMELDUNG

(11) **EP 2 272 731 A2**
(43) Veröffentlichungstag der Anmeldung: **12.01.2011**
(21) Anmeldenummer: 10006528.3
(22) Anmeldetag: 23.06.2010
(51) Int. Cl.: B61D 27/00, B60H 3/00

(54) **Verfahren zur Klimatisierung von Räumen, insbesondere von Räumen in Schienen- und Strassenfahrzeugen zur Personenbeförderung**

(30) Priorität: 06.07.2009 DE 102009032004
(71) Anmelder: Deutsche Bahn AG, 10785 Berlin (DE)
(72) Erfinder: Kindt, Axel, 19322 Wittenberge (DE)
(74) Vertreter: Zinken-Sommer, Rainer

(57) **Zusammenfassung**

Die Erfindung betrifft ein Verfahren zur Klimatisierung von Räumen, insbesondere von Räumen in Schienen- und Straßenfahrzeugen zur Personenbeförderung, wobei ein Personenerfassungssystem verwendet wird.

Der Erfindung liegt die Aufgabe zugrunde, für die Klimaanlage eines Raumes, insbesondere eines Fahrzeuges zur Personenbeförderung anhand der aktuellen Personenanzahl in der jeweiligen Klimazone, eine effektive und kostengünstige Steuerung bereitzustellen ohne die Qualität negativ zu beeinflussen.

Dies wird erfindungsgemäß dadurch erreicht, dass
die tatsächliche Personenanzahl in den Fahrzeugen und die jeweilige Raumluftqualität in den Fahrzeugen über Sensoren ermittelt und über eine Datenschnittstelle an eine Steuerung der Klimaanlage übermittelt werden, in der diese Daten auswertet und einem Klimarechner zugeleitet werden, wobei aus den Daten der Personenanzahl einen Faktor gebildet und zusätzlich zu den vorhandenen Parametern in den Regelprozess für die Ermittlung der notwendigen Frischluftmenge einpflegt wird. Die Daten aus der Messung der Raumluftqualität dienen ebenfalls der Überwachung bei ggf. gestörten Personenerfassungsgeräten.

## Beschreibung

Die Erfindung betrifft ein Verfahren zur Klimatisierung von Räumen, insbesondere von Räumen in Schienen- und Straßenfahrzeugen zur Personenbeförderung, wobei ein Personenerfassungssystem verwendet wird.

Bekannt sind übliche Klimaanlagen in Schienenfahrzeugen seit langem. Diese Klimaanlagen erfassen zumeist lediglich die Außen- und/oder die Innentemperatur in den Fahrgasträumen und regelt danach eine zuvor festgelegte Raumtemperatur ein. Es wird von einer vollen Personenbesetzung in den Räumen ausgegangen. Derartige Klimaanlagen sind aus der DE 25 24 400 C3 und der DE 25 42 768 C3 bekannt. Diese Klimaanlagen sind sehr energieaufwendig zu betreiben.

Aus der DE 101 14 524 B4 ist eine Klimaanlage in einem schnell fahrenden Fahrzeug, insbesondere einem Schienenfahrzeug bekannt, wobei die Steuerung über Mittel zur Ermittlung des Drucks und zur Ermittlung der Luftqualität erfolgt. Es wird nur soviel Frischluft konditioniert, wie aufgrund der Besetzung im Fahrzeuginneren erforderlich ist. Die Messung erfolgt über CO₂-Sensoren im Fahrgastraum als Referenzwert für die herrschende Konzentration der Riech- und Ekelstoffe. Diese Messung ist in Fahrzeugen des Nahverkehrs mit hohen Personenzahlwechseln in kurzer Zeit nicht sinnvoll.

Die DE 198 47 504 C1 beschreibt ein Verfahren zur Steuerung der Luftvolumenströme in einer raumtechnischen Anlage, vorzugsweise in Fahrzeugen zur Personenbeförderung durch kontinuierliche Bestimmung der Raumluftqualität, der thermischen Raumlast und dem Verhältnis der Raumtemperatur zur Außenlufttemperatur, wobei abhängig von diesen Werten, das Fördervolumen, der Außenluftanteil und die Temperatur der Zugluft so gesteuert werden, dass im Innenraum stets ein vorgegebener Raumluftzustand, der definiert ist durch den maximalen Gehalt eines Schadgases in der Raumluft und die Raumtemperatur , mit einem geringeren Energieaufwand gewährleistet ist. Die Personenanzahl wird über die Federbelastung der Fahrzeuge und die Luftqualität über CO₂-Sensoren gemessen. Da in die Federbelastung der Fahrzeuge auch das gesamte Gepäck der Fahrgäste eingezogen wird, ist diese Erfassung sehr ungenau und die Steuerung uneffektiv.

Der Erfindung liegt die Aufgabe zugrunde, für die Klimaanlage eines Raumes, insbesondere eines Fahrzeuges zur Personenbeförderung anhand der aktuellen Personenanzahl unter Überwachung von Grenzwerten für die Qualität der Raumluft, eine effektive und kostengünstige Steuerung bereitzustellen.

Dies wird erfindungsgemäß dadurch erreicht, dass
die tatsächliche Personenanzahl in den Fahrzeugen und der jeweilige Raumluftqualität in den Fahrzeugen über Sensoren ermittelt und über eine Datenschnittstelle an eine Steuerung der Klimaanlage übermittelt werden, in der diese Daten auswertet und einem Klimarechner zugeleitet werden, wobei aus den Daten einen Faktor gebildet und zusätzlich zu den vorhandenen Parametern in den Regelprozess für die Ermittlung der notwendigen Frischluftmenge einpflegt wird.

Die Fahrzeuge werden in Klimazonen unterteilt, wobei an jeden Übergang zwischen den Klimazonen mindestens ein Personenerfassungs- und -zählgerät als Sensor sowie je Klimazone mindestens ein Raumluftqualitätserfassungssensor installiert wird.

Eine Klimazone wird durch den Bereich gekennzeichnet der jeweils separat durch ein oder mehrere Klimageräte beeinflusst werden kann.

Die Daten jeder Klimazone werden getrennt aufgenommen, einzeln der Steuerung der Klimaanlage zugeleitet und fahrzeugspezifisch ausgewertet.

Die Personenanzahl wird permanent erfasst und die Messung der Raumluftqualität wird intervallartig oder kontinuierlich durchgeführt.

Bei einer Intervallmessung wird in einem Zeitraum bis zu 2 Min. die Raumluftqualität erfasst.

### Vorteile der Erfindung:

- die Steuerung einer Klimaanlage in Räumen nach der aktuellen Personenzahl und eingeteilt in einzelnen Klimazonen ist sehr effektiv
- die Erfassung der konkreten Raumluftqualität vorzugsweise in der Abluft der Räume stellt ein einfach zu messendes und aussagefähiges Kriterium zur effektiven Überwachung bei Ausfällen des Personenerfassungssystems bei der Steuerung einer Klimaanlage dar
- eine derart gesteuerte Klimaanlage verbraucht immer genau so viel Energie, wie notwenig ist
- die Klimaanlage kann sich sehr schnell an die verschiedenen Zustände im zu klimatisierenden Raum anpassen
- die Regelgeschwindigkeit ist sehr hoch
- die Nachrüstung eines derartigen Raumes mit einem Personenzählsystem ist einfach zu bewerkstelligen
- in bestimmten Räumen existieren für andere Zwecke Personenzählsysteme bereits und sind somit nachnutzbar
- eine Nachrüstung der Räume mit Raumluftqualitätserfassungssensoren ist ebenfalls problemlos möglich
- das Einpflegen beider Regelgrößen in vorhandene Steuerungen von Klimaanlagen ist einfach zu realisieren

### Ausführungsbeisaiel

Die Erfindung soll nachstehend anhand eines Ausführungsbeispieles näher erläutert werde.
Dabei zeigt:

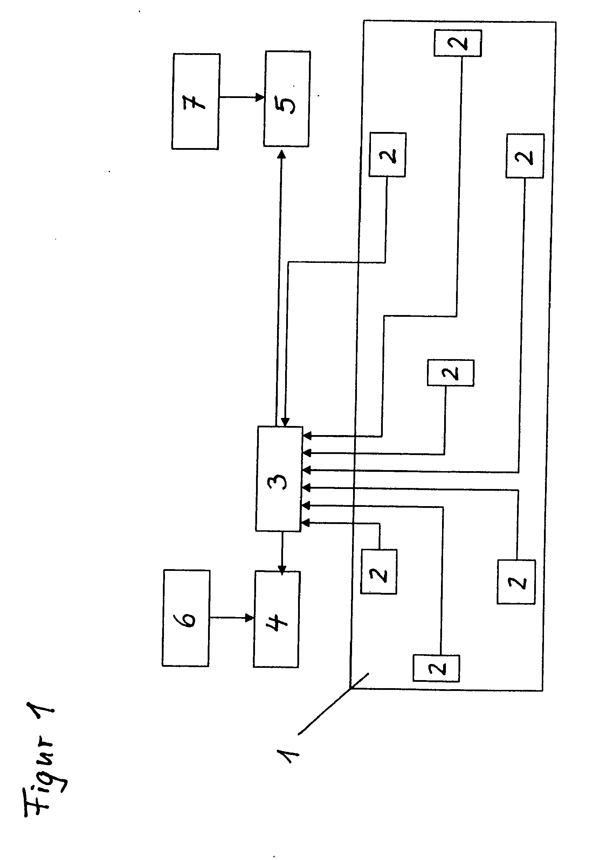

- Figur 1 - das Schema eines erfindungsgemäßen Regelsystems

Im Fahrzeug/Klimazone 1 werden an verschiedenen Stellen, vorzugsweise in den Einstiegs- und Ausstiegsbereichen Personenzählsensoren 2 angeordnet. Diese können als Lichtschranken oder ähnliches ausgebildet sein.
Alle Personenflussdaten aus einem(r) Fahrzeug/Klimazone 1 werden an einen Auswerterechner 3 übermittelt, der die Schnittstelle zur Steuerung 4; 5 (Klimarechner) der Klimaanlage darstellt. Parallel zu den Personenflussdaten speisen die Raumluftqualitätserfassungssensoren 6; 7 den Auswerterechner 3 mit den jeweiligen Sauerstoffkonzentrationen am Messort. Die Steuerung/Klimarechner 4; 5 ermitteln aus den beiden Datenströmen einen zusätzlichen Faktor, der den entscheidenden Wert für die in die jeweilige Klimazone 1 einzubringende Frischluftmenge darstellt. Darüber hinaus wird die/der Steuerung/Klimarechner 4; 5 selbstverständlich weiterhin mit alle üblichen Steuergrößen, wie Außentemperatur, Innentemperatur, Luftmengen und weiteren notwendigen Prozessdaten gespeist.
So ist es möglich, dass die Klimaanlage wie bisher die jeweils geforderten Regelwerte realisiert jedoch die Frischluftmenge der tatsächlichen Personenanzahl im Fahrzeug angepasst ist.

## Patentansprüche

1. Verfahren zur Klimatisierung von Räumen, insbesondere von Räumen in Schienen- und Straßenfahrzeugen zur Personenbeförderung, wobei ein Personenerfassungssystem verwendet wird,
***gekennzeichnet dadurch, dass***
die tatsächliche Personenanzahl in den Fahrzeugen und die jeweilige Raumluftqualität in den Fahrzeugen über Sensoren ermittelt und über eine Datenschnittstelle an eine Steuerung der Klimaanlage übermittelt werden, in der diese Daten auswertet und einem Klimarechner zugeleitet werden, wobei aus den Daten der Personenanzahl einen Faktor gebildet und zusätzlich zu den vorhandenen Parametern in den Regelprozess für die Ermittlung der notwendigen Frischluftmenge einpflegt wird, wobei die Daten aus der Messung der Raumluftqualität ebenfalls für eine Überwachung bei gestörten Personenerfassungsgeräten verwendet werden.

2. Verfahren nach Anspruch 1, ***gekennzeichnet dadurch, dass*** die Fahrzeuge in Klimazonen unterteilt werden.

3. Verfahren nach Anspruch 1 und 2, ***gekennzeichnet dadurch, dass*** an jeden Übergang zwischen den Klimazonen mindestens ein Personenerfassungs- und -zählgerät als Sensor sowie mindestens in jeder Klimazone ein Raumluftqualitätssensor installiert wird.

4. Verfahren nach Anspruch 2 und 3, ***gekennzeichnet dadurch, dass*** eine Klimazone durch ein oder mehrere Klimageräte in einem Fahrzeug gebildet wird.

5. Verfahren nach Anspruch 2 bis 4, ***gekennzeichnet dadurch, dass*** eine Klimazone durch ein Fahrzeug, vorzugsweise einen Teil des Fahrzeuges gebildet wird.

6. Verfahren nach Anspruch 2 bis 5, ***gekennzeichnet dadurch, dass*** die Daten jeder Klimazone getrennt aufgenommen, einzeln der Steuerung der Klimaanlage zugeleitet und klimazonenspezifisch ausgewertet werden.

7. Verfahren nach Anspruch 1, ***gekennzeichnet dadurch, dass*** die Messung der Personenanzahl und die Raumluftqualität in der Abluft intervallartig oder kontinuierlich durchgeführt wird.

8. Verfahren nach Anspruch 7, ***gekennzeichnet dadurch, dass*** bei einer Intervallmessung in einem Zeitraum von 0,5 bis 2 Min. die Raumluftqualität und laufend die Anzahl der Person erfasst werden.
